(19) **Europäisches Patentamt**
European Patent Office
Office européen des brevets

(11) **EP 2 279 105 B1**

(12) **EUROPÄISCHE PATENTSCHRIFT**

(45) Veröffentlichungstag und Bekanntmachung des Hinweises auf die Patenterteilung:
**20.04.2016 Patentblatt 2016/16**

(51) Int Cl.:
*B60T 8/1755* *(2006.01)*  *B60T 8/40* *(2006.01)*

(21) Anmeldenummer: **08874373.7**

(22) Anmeldetag: **17.12.2008**

(86) Internationale Anmeldenummer:
**PCT/EP2008/067756**

(87) Internationale Veröffentlichungsnummer:
**WO 2009/141023 (26.11.2009 Gazette 2009/48)**

(54) **BREMSANLAGE UND VERFAHREN ZUM BETREIBEN EINER BREMSANLAGE**

BRAKE SYSTEM AND METHOD FOR OPERATING A BRAKE SYSTEM

CIRCUIT DE FREINAGE ET PROCÉDÉ D'ACTIVATION D'UN CIRCUIT DE FREINAGE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **20.05.2008 DE 102008001868**
**24.06.2008 DE 102008002596**

(43) Veröffentlichungstag der Anmeldung:
**02.02.2011 Patentblatt 2011/05**

(73) Patentinhaber: **Robert Bosch GmbH**
**70442 Stuttgart (DE)**

(72) Erfinder:
• **BUNK, Michael**
**74072 Heilbronn (DE)**
• **AGAPOV, Konstantin**
**74232 Abstatt (DE)**
• **KRAUTTER, Andreas**
**74354 Besigheim (DE)**
• **SCHANZENBACH, Matthias**
**74246 Eberstadt (DE)**

(56) Entgegenhaltungen:
**DE-A1- 19 632 311  DE-A1- 19 712 889**
**DE-C1- 19 828 553**

EP 2 279 105 B1

**Beschreibung**

STAND DER TECHNIK

Die vorliegende Erfindung betrifft eine Bremsanlage und Verfahren zum Betreiben einer Bremsanlage.

In Bremsanlagen für Kraftfahrzeuge werden Pumpen eingesetzt, um ein aktives Bremsen zu ermöglichen. Die Pumpen werden so ausgelegt, dass sie für jede angeforderte Bremswirkung ausreichend Bremsflüssigkeit in einer vorgegebenen Zeitspanne in die Bremsleitungen einpumpen können. Eine Mindestanforderung stellen unter Anderem Fahrerassistenz- oder Fahrdynamikregelsysteme, die eine Vollbremsung oder ein kurzzeitiges, individuelles Abbremsen einzelner Räder für eine Fahrzeugstabilisierung in Grenzsituationen einleiten. Hierbei muss ein großes Volumen von Bremsflüssigkeit in kurzer Zeit gepumpt werden, weshalb eine hohe Drehzahl der Pumpen notwendig ist.

Allerdings führt eine hohe Drehzahl der Pumpen zu einer nicht akzeptierten Geräuschentwicklung.

Für die Bremsanlage wird eine Drehzahl im Rahmen der Applikation festgelegt, die einen Kompromiss zwischen Bremsdynamik und Geräuschentwicklung bildet. Der Kompromiss wird anhand vorhergehender Fahrversuche und Erfahrungswerte vergleichbarer Bremsanlagen ermittelt. Hierbei ergibt sich ein erheblicher Aufwand zum Auffinden des Kompromisses und die Gefahr eines Unterschätzens der erforderlichen Drehzahlen.

Die DE 198 28 553 C1 beschreibt ein Verfahren zur Bildung oder Anpassung eines Ansteuersignals zur Ansteuerung eines ein Druckmedium fördernden Mittels eines Fahrzeugbremssystems. Das in der DE 198 28 553 C1 beschriebene Verfahren ermittelt den Sollwert der Pumpenansteuerung aus dem Druckgradienten, welcher an einem Hochdruckspeicher mit einem Drucksensor gemessen wird.

Ein Verfahren zur Steuerung einer Hydraulikpumpe in einer geregelten Bremsanlage ist in der DE 196 32 311 A1 beschrieben. Das Verfahren der DE 196 32 311 A1 leitet dazu einen Sollwert der Hydraulikpumpe aus einem geschätzten Füllstand eines Niederdruckspeichers ab.

OFFENBARUNG DER ERFINDUNG

Die Erfindung schafft ein Verfahren zum Steuern einer Bremsanlage mit den Merkmalen des Anspruchs 1 und eine Bremsanlage mit den Merkmalen des Anspruchs 7.

Die Pumpleistung der Pumpe, z.B. der Rückförderpumpe, wird an einen aktuell notwendigen Förderbedarf einer Bremsflüssigkeit angepasst. Der Förderbedarf wird anhand einer aufzubauenden Druckänderung abgeschätzt. Die Pumpleistung kann beispielsweise linear mit der angeforderten Druckänderung erhöht werden.

Der Geräuschpegel im Fahrzeug aufgrund der Pumpe kann somit abgesehen im Bedarfsfall einer hohen Bremswirkung gering gehalten werden.

Das Verfahren bestimmt ein aktuelles Totvolumen der Bremsanlage und bestimmt die Pumpleistung in Abhängigkeit des aktuellen Totvolumens.

Beim anfänglichen Einsetzen der Pumpe kann es je nach Ausgestaltung eines Bremskreises vorkommen, dass zunächst keine Bremswirkung einsetzt. Zudem kann die Bremswirkung hinter der erwarteten Bremswirkung eines anvisierten Solldrucks zurückbleiben oder sich nicht innerhalb einer angeforderten Ansprechzeit einstellen. Die Totvolumen in den Bremskreisen füllen sich zunächst mit Bremsflüssigkeit, ohne dass eine Druckerhöhung eintritt. Die Ausgestaltung sieht vor, die Totvolumen in den Bremskreisen zu berücksichtigen und die Förderleistung der Pumpe anzuheben, vorzugsweise bis die Totvolumen gefüllt sind.

KURZE BESCHREIBUNG DER ZEICHNUNGEN

Die vorliegende Erfindung wird nachfolgend anhand bevorzugter Ausführungsformen und beigefügten Figuren erläutert. In den Figuren zeigen:

Fig. 1      ein Blockdiagramm einer Bremsanlage;

Fig. 2      ein Blockdiagramm der Signalverschaltung der Bremsanlage;

Fig. 3      ein Flussdiagramm zur Erläuterung der Verfahren zum Betreiben der Bremsanlage;

Fig. 4      eine Druck-Volumen Kennlinie der Bremsanlage und

Fig. 5      eine Illustration des Druckaufbaus bei einem aktiven Bremsen.

AUSFÜHRUNGSFORMEN DER ERFINDUNG

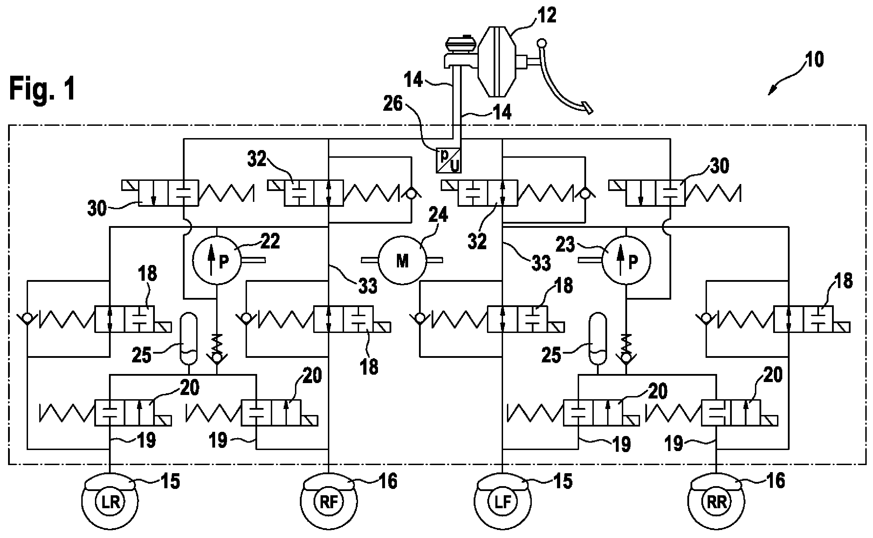

Figur 1 zeigt schematisch als Blockdiagramm eine hydraulische Bremsanlage 10. An einem Hauptbremszylinder 12 sind zwei voneinander unabhängige Bremskreise angeschlossen. In jedem der Bremskreise verbindet eine Hauptbremsleitung 14 den Hauptbremszylinder mit zwei angeschlossenen Radbremsen 15, 16. Die Radbremsen 15, 16 an einer der Hauptbremsleitung 14 können wie in Fig. 1 dargestellt ein Vorderrad und ein diagonal gegenüberliegendes Hinterrad bremsen. Neben dieser sogenannten X-Bremskreisaufteilung ist jedoch auch jede andere Aufteilung der Bremskreise möglich.

Die Hauptbremsleitung 14 verzweigt sich vor den Radbremsen 15, 16. In jedem der Zweige ist ein Einlassventil 18 angeordnet, das in einer Grundstellung offen ist. Von den Radbremsen 15, 16 führt jeweils eine Rückleitung 19 weg, die sich in einer gemeinsamen Rückleitung vereinigen. In die Rückleitungen 19 sind Auslassventile 20 geschaltet, die in ihrer Grundstellung geschlossen sind.

Ein Flüssigkeitsspeicher 25 kann mit einer oder beiden Rückleitungen 19 verbunden sein. Beim Lösen der Radbremsen 15, 16 werden die Auslassventile 20 geöffnet. Die Bremsflüssigkeit kann in den Flüssigkeitsspeicher 25 abfließen, wodurch sich der auf die Radbremsen 15, 16 wirkende hydraulische Druck verringert. Die Bremsflüssigkeit kann der Hauptbremszylinder 12 aus dem Flüssigkeitsspeicher 25 absaugen, wenn das Auslassventil 20 und das Umschaltventil 32 oder ein Hockdruckventil 30 offen ist. Ansonsten wird die Bremsflüssigkeit über Pumpenelemente 22, 23 zurückgefördert. Die Bremsflüssigkeit steht somit für einen weiteren Bremsvorgang zur Verfügung.

Ein aktives Bremsen oder ein teilaktives Bremsen wird durch motorbetriebene Pumpenelemente 22, 23 ermöglicht. Beim aktiven Bremsen wird ein Druck in den Bremskreisen allein durch die Pumpenelemente 22, 23 aufgebaut. Bei einem teilaktiven Bremsen unterstützen die Pumpenelemente 22, 23 den Druckaufbau des betätigten Hauptzylinders 12.

Das Pumpenelement 22, 23 kann für jeden der Bremskreise vorgesehen sein. Eine Auslassseite des Pumpenelements 22, 23 ist mit einer Leitung 33 zwischen dem Umschaltventil 32 und dem Einlassventil 18 verbunden. Das Pumpenelement 22, 23 kann Bremsflüssigkeit in die Leitung 33 pumpen, um den Druck in der Leitung 33 zu erhöhen und eine Bremswirkung der Radbremsen 15, 16 zu bewerkstelligen.

Der Hauptbremszylinder 12 kann über ein Hochdruckventil 30 mit der Ansaugseite der Pumpenelemente 22, 23 verbunden sein. Das Hochdruckventil 30 ist in seiner Grundstellung geschlossen.

Ein Umschaltventil 32 ist in die Hauptbremsleitung 14 integriert. Das Umschaltventil 32 kann die Auslassseite des Pumpenelements 22 mit dem Bremszylinder 12 verbinden. In seiner Grundstellung ist das Umschaltventil 32 geöffnet. Der Fluss von Bremsflüssigkeit durch das Umschaltventil 32 kann durch Anlegen eines Steuersignals eingestellt werden. Typischerweise wird ein Schwellwert für eine Druckdifferenz zwischen der Einlassseite und der Auslassseite des Umschaltventils 32 eingestellt, ab dem das Umschaltventil 32 öffnet. Der Schwellwert wird durch das Steuersignal eingestellt.

Ein Sensor 26 kann mit der Hauptbremsleitung 14 gekoppelt werden, um den Druck in der Hauptbremsleitung 14 zu erfassen. Weitere nicht dargestellte Drucksensoren können in den Radbremsen 15, 16 integriert sein oder in den unmittelbaren Zuleitungen zu den Radbremsen 15, 16 angeordnet sein.

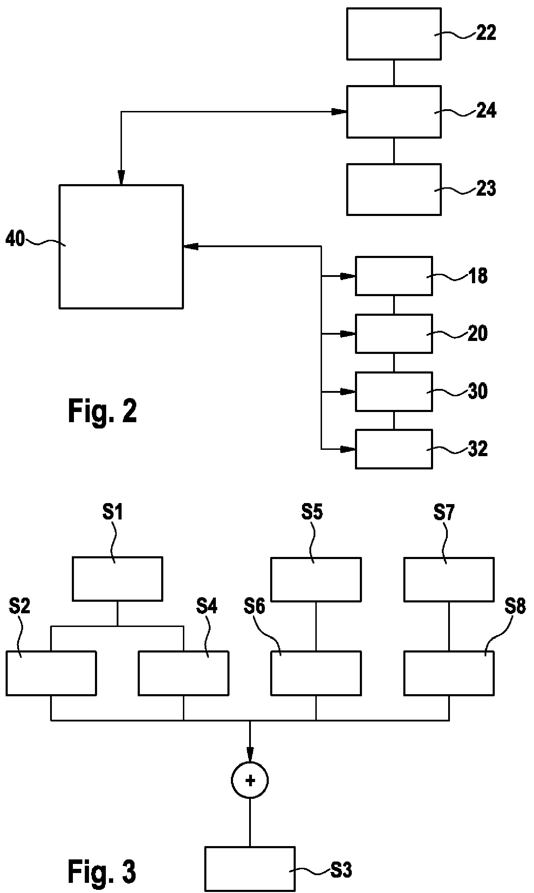

Die Pumpenelemente 22, 23 werden durch einen gemeinsamen Motor 24 angetrieben. Die Einlassventile 18, die Auslassventile 20, die Umschaltventile 32 und die Hochdruckventile 30 können als Magnetventile ausgebildet sein. Eine Steuereinrichtung 40 ist mit den Ventilen gekoppelt, um die Einlassventile 18, die Auslassventile 20, die Umschaltventile 32 und die Hochdruckventile 30 zu steuern. Die Steuereinrichtung 40 steuert ferner den Motor 24 für die Pumpenelemente. Die Steuereinrichtung 40 übermittelt ein Steuersignal zum Einstellen des Schwellwerts für das Umschaltventil 32. Die Kopplungen der Steuereinrichtung, Ventile 18, 20, 30, 32 und des Motors 24 zum Übertragen von Steuersignalen sind in einem Blockdiagramm in Figur 2 dargestellt.

Drehzahlsensoren können mit der Steuereinrichtung 40 gekoppelt sein, um einen Schlupf oder ein Blockieren der Räder zu erfassen. Die Steuereinrichtung 40 kann entsprechend die Ventile öffnen oder schließen und den Motor 24 ansteuern. Mit der beschriebenen Bremsanlage 10 ist ein standardmäßiges Bremsen, Bremseingriffe eines Fahrerassistenzsystems, eine Blockierschutz-, Antriebsschlupf- und/oder Fahrdynamikregelung möglich.

Die Anforderungen an die Bremsanlage sind vielfältig. Eingriffe in das Fahrverhalten im fließenden Verkehr, um zum Beispiel den Abstand zu einem vorausfahrenden Fahrzeug konstant zu halten, sollen für den Fahrer unbemerkt ablaufen. Hierbei ist eine genaue Dosierung der Bremskraft gefordert. Soll ein Schleudern des Fahrzeuges durch eine aktive Fahrdynamikregelung verhindert werden, ist ein schneller Aufbau und Abbau der Bremswirkung auf die Räder gefordert. Ein schnelles Ansprechen der Bremsanlage bedingt eine hohe Pumpleistung der Pumpelemente 22, 23. Mit zunehmender Pumpleistung geht allerdings auch eine zunehmende Geräuschentwicklung der Pumpenelemente 22, 23 und des Antriebmotors 24 einher.

Die nachfolgend beschriebene Ausführungsform steuert den Antriebmotor 24 in Abhängigkeit einer angeforderten Bremswirkung. Figur 3 zeigt als Flussdiagramm den Ablauf des Verfahrens.

Bei einem Bremsvorgang wird eine Bremswirkung angefordert. Die Anforderung kann durch Betätigen eines Bremspedals, durch ein entsprechendes Steuersignal einer Fahrdynamikregelung, eines Fahrerassistenzsystems (adaptive cruise control), etc. an die Steuereinrichtung 40 übermittelt werden (S1).

Das Bremssignal kann vorgeben, wie stark sich die Bremswirkung ändern soll. Ein Maß für die entsprechende Druckänderung, um die Bremswirkung einzustellen, kann unmittelbar in dem Bremssignal enthalten sein. Das Bremssignal kann ein digitales oder ein analoges Signal sein.

Die Steuereinrichtung 40 bestimmt anhand der angeforderten Druckänderung dp eine Pumpleistung q (S2). Die Pumpleistung q kann linear mit der angeforderten Druckänderung dp gemäß nachfolgender Beziehung erhöht werden:

$$q = E \, dp / dt.$$

Eine Ansprechzeit dt gibt vor, innerhalb welcher Zeitspanne die Druckänderung aufgebaut werden soll. Die Ansprechzeit dt kann von der Steuereinrichtung 40 z.B. als maximal zulässiger Wert fest vorgegeben sein. Die Ansprechzeit dt kann auch beispielsweise die Periode sein, mit der die Bremssignale übertragen werden.

In anderen Ausgestaltungen wird die Ansprechzeit dt von dem Bremssignal vorgegeben. Ein Fahrerassistenzsystem kann beispielsweise ermitteln, ob eine Vollbremsung notwendig ist, dann wird die Ansprechzeit dt entsprechend kurz gewählt. In solch einem Fall wird eine große Rate der Druckänderung dp/dt von dem Pumpensystem 22, 23, 24 angefordert. Soll das Fahrzeug hingegen im fließenden Verkehr einen konstanten Abstand zum Vordermann einhalten, sind langsame Änderungen des Drucks dp in der Bremsanlage ausreichend, in dem Fall kann das Bremssignal eine große Änderungsrate dt vorgeben. Der Antriebsmotor 24 der Pumpenelemente 22, 23 kann mit einer geringen Leistung betrieben werden und die Bremsanlage ist entsprechend leise.

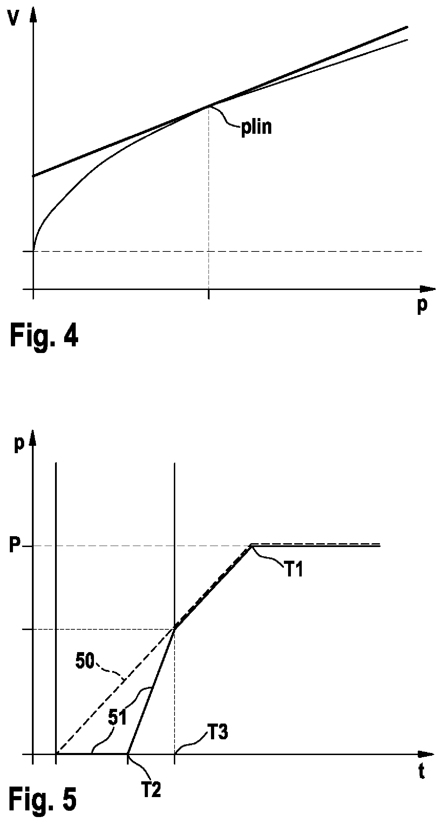

Der Proportionalitätsfaktor E ist eine Größe, die durch den Bremskreis festgelegt wird. Figur 4 zeigt eine Abhängigkeit des Drucks p in der Radbremse 15, 16 in Abhängigkeit des in die Radbremsen 15, 16 gepumpten Volumens V von Bremsflüssigkeit. Die Elastizität E kann als der Quotienten dV / dp um einen Arbeitspunkt plin festgelegt werden. Eine entsprechende Messung der Druck - Volumen Kennlinie des Bremskreises kann bei der Installation der Bremsanlage 10 durchgeführt werden und die ermittelte Elastizität E wird in der Steuereinrichtung 40 abgespeichert.

Bei einer anderen Ausgestaltung ist vorgesehen, in der Steuereinrichtung 40 die Druck-Volumen Kennlinie abzuspeichern. Die Elastizität E wird zu einem aktuellen Istdruck p0 fortlaufend aus der Druck-Volumen Kennlinie neu bestimmt.

Die Steuereinrichtung 40 ermittelt aus der Pumpleistung q eine Drehzahl n für die Pumpenelemente 22, 23 bzw. den die Pumpenelemente 22, 23 antreibenden Motor 24 (S3). Die Drehzahl n kann nach folgender Beziehung bestimmt werden:

$$n = q / ( e \, V ) .$$

Der Wirkungsgrad e der Pumpenelemente 22, 23 und das Pumpvolumen V pro Pumpzyklus der Pumpenelemente 22, 23 wird berücksichtigt. Falls sich für mehrere Bremskreise der Pumpenelemente 22, 23, die an einen gemeinsamen Motor 24 angeschlossen sind, verschiedene Drehzahlen n ermittelt werden, wird vorzugsweise die größte der ermittelten Drehzahlen n ausgewählt.

Die lineare Erhöhung der Pumpleistung q oder der Drehzahl n kann in mehreren diskreten Stufen, z.B. vier oder mehr Stufen, erfolgen. Alternativ kann die Pumpleistung q oder die Drehzahl n kontinuierlich erhöht werden.

Eine weitere Ausführungsform gestaltet die vorhergehende Ausführungsform aus. Bei der Bestimmung der Pumpleistung q werden Totvolumen V0 in den Bremskreisen berücksichtigt. Beim Druckaufbau wird durch eingepumpte Bremsflüssigkeit zunächst ein Totvolumen V0 gefüllt. Eine Druckerhöhung kann somit für den Beginn des Pumpens ausbleiben oder hinter der geforderten Ansprechzeit dt zurückbleiben.

Ein Beispiel für ein Totvolumen V0 kann ein Lüftspiel bedingt durch einen Spalt zwischen Bremsbelag und Bremsscheibe sein, unter Umständen können auch das Volumen der Ventile, der Hauptbremsleitung 14, Rückleitung 19 etc zu dem Lüftspiel beitragen. Zudem vergrößert sich das Volumen des Bremskreises, wenn Bremskolben der Radbremsen 15, 16 unter Einwirkung des hydraulischen Drucks nach außen gedrückt werden, wodurch sich ebenfalls ein nicht-lineares Verhalten zwischen Druck p und Volumen V ergibt, welches dem Totvolumen V0 zugerechnet werden kann.

Das Totvolumen V0 bedingt durch das Lüftspiel kann für verschiedene Betriebsbedingungen der Bremsanlage in Versuchsserien ermittelt werden. Die Betriebsbedingungen umfassen beispielsweise die Betriebstemperatur und die Querbeschleunigung. Die ermittelten Tabellen, Kennlinien etc. werden in der Steuereinrichtung 40 gespeichert.

Die Steuereinrichtung 40 ermittelt eine Pumpleistung q, die notwendig ist, das Totvolumen V0 innerhalb einer vorgegebenen Zeitspanne T zu füllen (S4). Die vorgegebene Zeitspanne T kann gleich der Ansprechzeit dt sein. Die Pumpleistung q ergibt sich nach:

$$q = E \, dp / dt + V0 / T.$$

Die Drehzahl n wird wie in der vorherigen Ausführungsform basierend auf der Pumpleistung q bestimmt.

In Figur 5 ist die Änderung des Drucks p über die Zeit t für die beschriebene Ausführungsform dargestellt. Der Anstieg des Drucks p soll der gestrichelten Linie 50 entsprechend über die Zeit t erhöht werden, bis der Zieldruck P erreicht wird. Der Druck p kann dem zeitabhängigen Solldruck gemäß d.h. entlang der gestrichelten Linie 50 erhöht werden, wenn kein oder nur ein vernachlässigbares Totvolumen V0 in dem Bremskreis vorhanden ist.

Der Druck p baut sich bis zu einem Zeitpunkt T1 auf, bei dem ein Zieldruck P erreicht wird. Die durchgezogene Linie 51 illustriert das Verhalten bei Vorliegen eines Totvolumens V0. Bis zu einem Zeitpunkt T2 ergibt sich keine Druckerhöhung, weil das Totvolumen V0 aufgefüllt wird. Danach steigt der Druck p an. Wegen der um V0 / T erhöhten Pumpleistung q wird eine Dynamik des Druckaufbaus erreicht, die einer Bremsanlage ohne Totvolumen V0 entspricht.

Eine andere Ausführungsform berücksichtigt mittelbar das Totvolumen V0 Für den Bremskreis ist die Druck-Volumen Kennlinie nach Figur 4 in der Steuereinrichtung 40 hinterlegt. Die Abhängigkeit kann in Form einer Tabelle, einer Kennlinie oder eines angepassten Polynoms definiert sein.

Die Steuereinrichtung 40 empfängt das Bremssignal, in welchem der zu erreichende aktuelle Solldruck angegeben ist. Mittels der Drucksensoren wird der Istdruck P0 in den Radbremsen 15, 16 bestimmt oder anhand eines Modells durch die Steuereinrichtung 40 geschätzt. Basierend auf der hinterlegten Druck-Volumen Abhängigkeit, dem Istdruck P0 und dem zu erreichenden aktuellen Solldruck wird ein Volumen V1 von Bremsflüssigkeit bestimmt, welches in die Leitung 33 eingepumpt, den aktuellen Druck von Istdruck P0 auf den aktuellen Solldruck anhebt. Die Pumpleistung q wird wie folgt bestimmt:

$$q = E\, dp\,/\,dt\ +\ V1\,/\,T.$$

Die Drehzahl n wird wie in den vorherigen Ausführungsformen basierend auf der Pumpleistung q bestimmt.

Eine weitere Ausführungsform sieht eine Stellreserve qr für eine hohe Dynamik beim Bremsen vor.

Ein Querbeschleunigungssensor ermittelt senkrecht zur Fahrtrichtung auftretende Beschleunigungswerte (S5). Eine solche Beschleunigung tritt typischerweise aufgrund der Zentrifugalkraft bei einer Fahrt durch eine Kurve auf.

Überschreitet die Querbeschleunigung einen Schwellwert, wird die Pumpleistung q erhöht (S6). Die Erhöhung qr kann proportional zu der erfassten Querbeschleunigung sein. Der zusätzlichen Pumpleistung qr liegt zugrunde, dass bei einer weiteren Erhöhung der Querbeschleunigung über einen zweiten Schwellwert eine aktive Fahrdynamikregelung aktiv wird und das Fahrzeug durch gezieltes Bremsen der Räder stabilisiert. Damit ein schnelles Ansprechen der Fahrdynamikregelung gewährleistet bleibt, wird vorsorglich die Pumpleistung q um die Stellreserve qr erhöht.

Neben der Querbeschleunigung können auch die Fahrzeuggeschwindigkeit, ein Abstand zum Vordermann, eine durch ein Bilderkennungssystem erkannte rote Ampel etc zu einer Erhöhung der Pumpleistung q beitragen.

Die Kennlinien, insbesondere die Druck-Volumen Kennlinie unterliegen im Betrieb Schwankungen. Dies hat zur Folge, dass die Bremswirkung nur im Rahmen einer Toleranz eingestellt oder dosiert werden kann. Bei einmalig auftretenden Bremsmanövern oder bei kurzzeitig einsetzenden, stabilisierenden Bremsmanövern, die über Regelungsschleifen die Bremswirkung kontrollieren, können die Schwankungen vernachlässigt werden. Bei einem dauerhaften Bremsen oder wiederholtem Bremsen, um eine definierte Geschwindigkeit eines Fahrzeuges oder einen definierten Abstand zu einem vorausfahrenden Fahrzeug einzustellen, kann eine höhere Genauigkeit und höhere Wiederholgenauigkeit gefordert werden.

Die nachfolgend beschriebene Ausführungsform nutzt hierfür die Umschaltventile 32 in dem Bremskreislauf. Die Umschaltventile 32 können durch Stellsignale auf einen Schwellwert eingestellt werden, ab dem Bremsflüssigkeit aus der Leitung 33 abfließen kann. Die Umschaltventile werden zum Einstellen eines gewünschten Drucks in den Radbremsen 15, 16 genutzt werden, indem der Schwellwert auf den gewünschten Druck eingestellt wird. Die Pumpleistung q wird gezielt um einen Überschussbetrag qa oberhalb der minimal notwendigen Pumpleistung q gehalten, so dass beim Erreichen des Solldrucks P Bremsflüssigkeit über die Umschaltventile 32 abfließen kann. In Figur 5 setzt die Wirkung der Umschaltventile 32 beispielsweise ab dem Zeitpunkt T3 ein. Der Schwellwert der Umschaltventile 32 wird fortlaufend angehoben, bis der Solldruck P erreicht ist. Dieses Verfahren ermöglicht, den Solldruck P0 mit einer definierten Dynamik zu erreichen.

Die Wiederholgenauigkeit der Umschaltventile 32 kann von dem Fluss durch das Umschaltventil abhängen. Daher kann der Überschussbetrag qa vorzugsweise so gewählt werden, dass das Umschaltventil eine ausreichende Wiederholgenauigkeit des Solldrucks bei dem überströmenden Fluss von Bremsflüssigkeit aufweist.

In einer Ausführungsform werden alle vier obig beschriebenen Beträge zum Ermitteln der Pumpleistung q herangezogen:

$$q = E\, dp\,/\,dt\ +\ V1\,/\,T\ +\ qr\ +\ qa.$$

**Patentansprüche**

1. Verfahren zum Steuern einer Bremsanlage mit den Schritten:

Empfangen eines Bremssignals zum Einstellen einer Bremswirkung durch die Bremsanlage, wobei das Bremssignal eine Ansprechzeit für die Bremswirkung vorgibt;
Ermitteln einer minimalen Rate eines Druckanstiegs in der Bremsanlage, um die Bremswirkung in der vorgegebenen Ansprechzeit zu bewirken; und
Einstellen einer Pumpleistung einer Pumpe der Bremsanlage, so dass der Druck in der Bremsanlage gemäß der minimalen Rate ansteigt;
**dadurch gekennzeichnet, dass**
das Bremssignal durch Betätigen eines Bremspedals ausgelöst ist, ein Steuersignal einer Fahrdynamikregelung ist oder ein Steuersignal eines Fahrerassistenzsystems ist; und

ein aktuelles Totvolumen der Bremsanlage bestimmt wird und die Pumpleistung in Abhängigkeit des aktuellen Totvolumens bestimmt wird, indem die Pumpleistung in Abhängigkeit eines Quotienten des aktuellen Totvolumens und der Ansprechzeit eingestellt wird.

**2.** Verfahren nach Anspruch 1, wobei die Pumpleistung linear von der minimalen Rate des Druckanstiegs abhängt.

**3.** Verfahren nach Anspruch 1 oder 2, wobei das Bremssignal einen Solldruck vorgibt, der aktuelle Istdruck in der Bremsanlage bestimmt wird, basierend auf einer Kennlinie der Bremsanlage ein Volumen von Bremsflüssigkeit ermittelt wird, das eingepumpt in die Bremsanlage den Druck von dem Istdruck auf den Solldruck anhebt und die Pumpleistung der Pumpe in Abhängigkeit des ermittelten Volumens und der vorgegebenen Ansprechzeit eingestellt wird.

**4.** Verfahren nach einem der vorhergehenden Ansprüche, wobei das aktuelle Totvolumen der Bremsanlage aus einem Datenspeicher der Bremsanlage ausgelesen wird.

**5.** Verfahren nach einem der vorhergehenden Ansprüche, wobei eine Querbeschleunigung und/oder Geschwindigkeit erfasst wird und mit zunehmender Querbeschleunigung und/oder Geschwindigkeit die Pumpleistung erhöht wird.

**6.** Verfahren nach einem der vorhergehenden Ansprüche, wobei das Bremssignal einen Solldruck vorgibt, ein Umschaltventil auf den vorgegebenen Solldruck eingestellt wird und bei Erreichen des vorgegebenen Solldrucks die Pumpleistung in Abhängigkeit eines vorgegebenen Flusses durch das Umschaltventil eingestellt wird.

**7.** Bremsanlage mit:

einer Pumpe (22, 23, 24) zum Aufbauen eines hydraulischen Drucks in einer Leitung (33), an die wenigstens ein Bremselement (15, 16) angeschlossen ist, und

einer Steuereinrichtung (40) zum Einstellen einer Pumpleistung der Pumpe (22, 23, 24) mit einem Verfahren nach einem der Ansprüche 1 bis 6.

**Claims**

**1.** Method for controlling a brake system having the steps:

receiving a brake signal for setting a braking effect by means of the brake system, wherein the brake signal predefines a response time for the braking effect;

determining a minimum rate of a rise in pressure of the brake system in order to bring about the braking effect in the predefined response time; and

setting a pumping capacity of a pump of the brake system, with the result that the pressure in the brake system rises according to the minimum rate;

**characterized in that**

the brake signal is triggered by actuating a brake pedal, is a control signal of a vehicle dynamics controller or is a control signal of a driver assistance system; and

a current dead volume of the brake system is determined, and the pumping capacity is determined as a function of the current dead volume **in that** the pumping capacity is set as a function of a quotient of the actual dead volume and of the response time.

**2.** Method according to Claim 1, wherein the pumping capacity depends linearly on the minimum rate of the rise in pressure.

**3.** Method according to Claim 1 or 2, wherein the brake signal predefines a setpoint pressure, the current actual pressure is determined in the brake system, a volume of brake fluid which when pumped into the brake system raises the pressure from the actual pressure to the setpoint pressure is determined on the basis of a characteristic curve of the brake system, and the pumping capacity of the pump is set as a function of the determined volume and the predefined response time.

**4.** Method according to one of the preceding claims, wherein the current dead volume of the brake system is read out from a data memory of the brake system.

**5.** Method according to one of the preceding claims, wherein a lateral acceleration and/or speed is detected and is increased with increasing lateral acceleration and/or speed of the pumping capacity.

**6.** Method according to one of the preceding claims, wherein the brake signal predefines a setpoint pressure, a switchover valve is set to the predefined setpoint pressure, and when the predefined setpoint pressure is reached the pumping capacity is set as a function of a predefined flow through the switchover valve.

**7.** Brake system having:

a pump (22, 23, 24) for building up a hydraulic pressure in a line (33) to which at least one brake element (15, 16) is connected, and
a control device (40) for setting a pumping capacity of the pump (22, 23, 24) with a method according to one of Claims 1 to 6.

## Revendications

1. Procédé de commande d'un système de freinage, comportant les étapes consistant à :

   recevoir un signal de freinage pour produire une action de freinage au moyen du système de freinage, dans lequel le signal de freinage prédéfinit un temps de réponse pour l'action de freinage ; déterminer un taux minimal d'augmentation de la pression dans le système de freinage afin de produire l'action de freinage pendant le temps de réponse prédéfini ; et
   régler une puissance de pompage d'une pompe du système de freinage de manière à ce que la pression régnant dans le système de freinage augmente conformément au taux minimal ; **caractérisé en ce que** le signal de freinage est déclenché par actionnement d'une pédale de frein, **en ce qu'**il s'agit d'un signal de commande d'un système de contrôle électronique de stabilité ou **en ce qu'**il s'agit d'un signal de commande d'un système d'assistance au conducteur ; et **en ce qu'**un volume mort actuel du système de freinage est déterminé et **en ce que** la puissance de pompage est déterminée en fonction du volume mort actuel en réglant la puissance de pompage en fonction d'un quotient entre le volume mort actuel et le temps de réponse.

2. Procédé selon la revendication 1, dans lequel la puissance de pompage dépend de manière linéaire du taux minimal d'augmentation de la pression.

3. Procédé selon la revendication 1 ou 2, dans lequel le signal de freinage prédéfinit une pression nominale, en ce que la pression réelle actuelle est déterminée dans le système de freinage, en ce que, sur la base d'une courbe caractéristique du système de freinage, un volume de liquide de freinage qui est pompé dans le système de freinage est déterminé, celui-ci faisant croître la pression de la pression réelle à la pression nominale et la puissance de pompage de la pompe est réglée en fonction du volume déterminé et du temps de réponse prédéfini.

4. Procédé selon l'une quelconque des revendications précédentes, dans lequel le volume mort actuel du système de freinage est lu depuis une mémoire de données du système de freinage.

5. Procédé selon l'une quelconque des revendications précédentes, dans lequel une accélération transversale et/ou une vitesse est détectée et la puissance de pompage est augmentée lorsque l'accélération transversale et/ou la vitesse croît.

6. Procédé selon l'une quelconque des revendications précédentes, dans lequel le signal de freinage prédéfinit une pression nominale, une soupape d'inversion est réglée à la pression nominale prédéfinie et lorsque la pression nominale prédéfinie est atteinte, la puissance de pompage est réglée en fonction d'un débit prédéfini à travers la soupape d'inversion.

7. Système de freinage, comportant .

   une pompe (22, 23, 24) destinée à établir une pression hydraulique dans une conduite (33) à laquelle au moins un élément de freinage (15, 16) est raccordé, et
   un dispositif de commande (40) destiné à régler une puissance de pompage de la pompe (22, 23, 24) au moyen d'un procédé selon l'une quelconque des revendications 1 6.

**Fig. 1**

22

24

23

40

18

20

30

32

**Fig. 2**

S1

S5

S7

S2

S4

S6

S8

+

**Fig. 3**

S3

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19828553 C1

- DE 19632311 A1